# EUROPÄISCHE PATENTSCHRIFT

(11) **EP 2 017 773 B1**
(45) Veröffentlichungstag und Bekanntmachung des Hinweises auf die Patenterteilung: **25.11.2009**
(21) Anmeldenummer: 08104495.0
(22) Anmeldetag: 20.06.2008
(51) Int. Cl.: G06K 19/077, G06Q 10/00

(54) **Verfahren und Vorrichtung zur Positionsbestimmung eines auf einer Transportvorrichtung positionierten Produktionsteils**
Method and device for determining the position of a production component positioned on a transport device
Procédé et dispositif de détermination de la position d'une pièce de production positionnée sur un dispositif de transport

(30) Priorität: 22.06.2007 DE 102007029309
(43) Veröffentlichungstag der Anmeldung: 21.01.2009
(73) Patentinhaber: SIEMENS AKTIENGESELLSCHAFT, 80333 München (DE)
(72) Erfinder: Leikauf, Friedrich-Ernst, 90571 Schwaig (DE); Rösel, Wolfgang, 90513 Zirndorf (DE); Albert, Christian, 91466 Gerhardshofen (DE); Spangler, Raimund, 90408, Nürnberg (DE); Wirsing, Joachim, 91056 Erlangen (DE)

(56) Entgegenhaltungen:
- EP-A- 1 182 154
- DE-A1- 19 854 744
- US-A1- 2006 152 367

## Beschreibung

Die Erfindung betrifft ein Verfahren und eine Vorrichtung zur Positionsbestimmung von auf einer Transportvorrichtung positionierten Produktionsteilen, wobei jedes Produktionsteil eine berührungslos auslesbare Speichereinheit trägt, in welcher eine das Produktionsteil identifizierende Teilekennung hinterlegt ist.

Ein derartiges Verfahren bzw. eine derartige Vorrichtung kommt insbesondere bei Fertigungsprozessen zum Tracking und Tracing sowie zur Qualitätsverbesserung von Produkten zum Einsatz. In vielen Fertigungsprozessen werden die Produktionsteile in einer Transportvorrichtung (Trägergestell, z.B. ein Skid) zumindest teilweise durch die Fertigungsanlage geführt. Dabei kann die jeweilige Lage der Produktionsteile im Trägergestell Einfluss auf die Qualität der Produkte haben. In einem Lackierprozess z.B. werden die oberen Teile eine andere Qualität als die darunterliegenden Teile haben (Lacknebelverteilung etc.). Eine weitere Anwendungsmöglichkeit ist z.B. in Prozessen gegeben, in denen in temperaturabhängigen Prozessstufen die Temperaturverteilung beim Durchlauf der Produktionsteile qualitätsrelevante Einflüsse auf den Fertigungsprozess hat, wobei die Temperaturverteilung von der örtlichen Lage der Produktionsteile in der Transportvorrichtung abhängt (oben höhere Temperatur als oben etc.). Damit sind z.B. reaktive SPC-("Statistical Process Control"-)Verfahren möglich, die bei Prozessabweichungen sofortige Korrekturen (Nachregelungen) ermöglichen und damit Qualitätsverluste verhindern. So können beispielsweise bei Lackfehlern an Teilen, die im Fertigungsprozess im Trägergestell (Skid) immer unten transportiert wurden, in einer Rückrufaktion gezielt nur die Komponenten angesprochen werden, die sich im Prozess an dieser bestimmten Lage befunden haben. Bei z.B. sechs Teilen an einem Skid reduziert sich somit die Menge der betroffenen Teile je nach Ausführung der Transportvorrichtung auf 1/6 oder 1/3.

Derzeit ist eine Lokalisierung der Produktionsteile auf der Transportvorrichtung nur mittels geführter Scanner möglich, die zum jeweiligen Objekt geführt werden und die Identifikation direkt am Produkt (z.B. über RFID oder Barcode) selektiv durchführen.

Der Erfindung liegt die Aufgabe zugrunde, Produktionsteile auf einer Transportvorrichtung automatisch zu lokalisieren.

Diese Aufgabe wird bei einem Verfahren der eingangs genannten Art dadurch gelöst, dass
- von zumindest einem Erfassungssystem mit einem Lesegerät und zumindest zweier einen Erfassungsbereich aufweisenden Erfassungseinheiten die Teilekennung des Produktionsteils ausgelesen wird,
- durch eine räumlich verteilte Anordnung der Erfassungseinheiten des Erfassungssystems ein Gesamterfassungsbereich gebildet wird,
- beim Durchführen der Transportvorrichtung durch den Gesamterfassungsbereich von wenigstens einem Teil der mehreren Erfassungseinheiten mehrfach hintereinander Ausleseversuche der Teilekennungen der Produktionsteile erfolgen,
- bei einem Ausleseversuch ein Ansprechsignal für eine auszulesende Speichereinheit ausgesendet wird, welches bei Empfang in der Speichereinheit ein die Teilekennung übermittelndes Antwortsignal auslöst,
- der Ausleseversuch dann für eine Erfassungseinheit als erfolgreich gewertet wird, wenn sie das Antwortsignal empfängt, wobei der Erfolg eines Ausleseversuches von einem Abstand der das Antwortsignal empfangenden Erfassungseinheit zu der auszulesenden Speichereinheit abhängt,
- jeder Erfassungseinheit für jede der Speichereinheiten die Anzahl an erfolgreichen Ausleseversuchen zugeordnet wird, und
- mittels einer Rechnereinheit über eine Häufigkeitsverteilung der Anzahlen erfolgreicher Ausleseversuche von einer Speichereinheit über die Erfassungseinheiten auf die Position des diese Speichereinheit tragenden Produktionsteils in der Transportvorrichtung geschlossen wird.

Die Aufgabe wird weiter durch eine Vorrichtung mit den in Anspruch 12 angegebenen Merkmalen gelöst.

Erfindungsgemäß wird beim Durchführen der Transportvorrichtung durch den Gesamterfassungsbereich von zumindest einem Teil der mehreren Erfassungseinheiten wiederholt ein Ansprechsignal an die Speichereinheiten der Produktionsteile ausgesendet, das bei Empfang ein entsprechendes Antwortsignal auslöst. Empfängt nun wiederum eine Erfassungseinheit das Antwortsignal einer Speichereinheit, so war der Ausleseversuch dieser Speichereinheit für die betreffende Erfassungseinheit erfolgreich. Jeder Erfassungseinheit wird die (Gesamt-) Anzahl der erfolgreichen Ausleseversuche für jede Speichereinheit zugeordnet. Da der Erfolg eines Ausleseversuches vom Abstand der das Antwortsignal empfangenden Erfassungseinheit von der jeweiligen Speichereinheit abhängt, kann mittels einer Rechnereinheit über die Häufigkeitsverteilung der erfolgreichen Ausleseversuche auf die Position der jeweiligen Speichereinheit - und damit natürlich des betreffenden Produktionsteils - auf der Transportvorrichtung geschlossen werden.

Eine Transportvorrichtung hat eine definierte und bekannte Anzahl an möglichen Positionen für Produktionsteile. Bei einer Transportvorrichtung mit beispielsweise drei Positionen (oben, mittig, unten) würde theoretisch ein Erfassungssystem mit zwei übereinander angeordneten Erfassungseinheiten genügen. Bei der Durchführung der Transportvorrichtung durch den Gesamterfassungsbereich würde beispielsweise die obere Erfassungseinheit nur von den oberen beiden Positionen erfolgreich die Speichereinheiten auslesen können und die untere Erfassungseinheit nur von den unteren beiden Positionen. D.h. bei der oberen Speichereinheit würde nur die obere Erfassungseinheit ansprechen, bei der mittleren Speichereinheit beide Erfassungseinheiten und bei der unteren Speichereinheit nur die untere Erfassungseinheit.

Bei einer Transportvorrichtung mit sechs möglichen Positionen beispielsweise jeweils links und rechts oben, mittig und unten ist es vorteilhaft, Erfassungseinheiten an beiden Seiten der Transportvorrichtung zu positionieren. Dabei können die Erfassungseinheiten an jeder Seite auch jeweils über ein Lesegerät verfügen, so dass hier also zwei Erfassungssysteme zum Einsatz kommen, die an eine Rechnereinheit zur Auswertung der Häufigkeitsverteilungen der erfolgreichen Ausleseversuche angeschlossen sind.

Jedes Produktionsteil (bzw. Produkt) ist mit einer eindeutigen Teilekennung (Transponder-ID) ausgestattet. Mittels mathematisch statistischer Methoden (Verteilungs- bzw. Häufigkeitsanalyse) erfolgt eine Zuordnung der lokalen Platzierung auf der Transportvorrichtung (Trägergestell). Über die Anordnung der technischen Leseeinheiten (d.h. der Erfassungseinheiten, z.B. Antennen) sowie das spezifische Abtastverfahren kann die Häufigkeit der empfangenen Transponder-Informationen ausgewertet werden. Aus der Häufigkeit in Kombination mit der jeweiligen Empfangsposition der Antennen kann die örtliche Lage sowohl horizontal als auch vertikal ermittelt werden. Das Ergebnis ist eine Zuordnung der Transponder-ID zu lokalen Positionen auf dem Trägergestell (links, rechts sowie oben, mittig, unten).

Durch die erfindungsgemäße Lösung werden somit die Produktionsteile in der Transportvorrichtung - dem Trägergestell, z.B. Skid - automatisch und berührungslos lokalisiert. Hierdurch ist nicht nur ein Tracking und Tracing von Produkten im Fertigungsprozess möglich, sondern insbesondere der Vorteil verbunden, dass es mit der beschriebenen Methode möglich ist, automatisch die lokale Position genau zu bestimmen, um bei Prozessbesonderheiten Rückschlüsse auf eine Abhängigkeit der Besonderheit von der Position der Produktionsteile zur Verfügung stellen zu können (z.B. Lacknebelverteilung, Temperaturverteilung etc.).

In einer vorteilhaften Form der Ausgestaltung wird der Ausleseversuch dann für eine Erfassungseinheit als erfolgreich gewertet, wenn sie das Ansprechsignal sendet und zumindest eine Erfassungseinheit das Antwortsignal empfängt, wobei der Erfolg eines Ausleseversuches von einem Abstand der das Ansprechsignal sendenden Erfassungseinheit zu der auszulesenden Speichereinheit abhängt. In diesem Fall können die Speichereinheiten das Ansprechsignal nur empfangen, wenn sie sich in der Nähe der das Ansprechsignal sendenden Erfassungseinheit befinden, so dass ein von irgendeiner Erfassungseinheit empfangenes Antwortsignal die Information beinhaltet, dass sich die betreffende Speichereinheit nahe bei der das Ansprechsignal sendenden Erfassungseinheit befand. Somit kann auch diese Information als erfolgreicher Ausleseversuch für die sendende Erfassungseinheit gewertet werden und zur Auswertung herangezogen werden.

In einer weiteren vorteilhaften Ausführungsform wird zumindest eine Erfassungseinheit in einem Sendezustand zum Aussenden des Ansprechsignals und danach in einem Empfangszustand zum Empfangen des Antwortsignals betrieben oder umgekehrt. Hierdurch kann bei der zumindest einen Erfassungseinheit ein Wechsel der jeweiligen Sende- und Empfangsfunktion als rollierendes Verfahren erfolgen, wodurch diese Erfassungseinheit das auf das von ihr ausgesendete Ansprechsignal folgende Antwortsignal der auszulesenden Speichereinheit auch selbst empfangen kann. Durch die Bereitstellung beider Funktionalitäten in zumindest einer Erfassungseinheit kann die erforderliche Anzahl an Erfassungseinheiten reduziert werden.

In einer weiteren vorteilhaften Ausführungsform wechselt dabei nach einer bestimmbaren Anzahl von Ausleseversuchen wenigstens eine Erfassungseinheit vom Empfangszustand in den Sendezustand oder umgekehrt. Hierdurch wird ein weiterer Betriebszustand bereitgestellt, wodurch das zumindest eine Erfassungssystem flexibler betrieben werden kann. So kann beispielsweise für die bestimmbare Anzahl von Ausleseversuchen zunächst eine Erfassungseinheit das Ansprechsignal senden, während sich die anderen Erfassungseinheiten im Empfangszustand befinden. Nach der bestimmbaren Anzahl von Ausleseversuchen kann dann eine andere Erfassungseinheit in den Sendezustand wechseln, während die zuerst das Ansprechsignal sendende Erfassungseinheit in den Empfangszustand wechselt.

In einer weiteren vorteilhaften Ausführungsform wird die jeweilige Anzahl an erfolgreichen Ausleseversuchen in einer Datenstruktur in einem Datenspeicher der Rechnereinheit gespeichert. Durch die Speicherung der Datenstruktur, die z.B. als Matrix ausgebildet sein kann, im üblicherweise ohnehin vorhandenen Datenspeicher der Rechnereinheit kann auf die Einrichtung von Speichern in den Erfassungseinheiten bzw. im Lesegerät verzichtet werden.

In einer weiteren vorteilhaften Ausführungsform wird eine Transportgeschwindigkeit, mit der die Transportvorrichtung in einer Transportrichtung durch den Gesamterfassungsbereich gefahren wird, in Abhängigkeit der Ausdehnung des Gesamterfassungsbereiches in Transportrichtung und von der Anzahl erfolgender Ausleseversuche bestimmt. Für eine vernünftige statistische Auswertung ist eine Mindestzahl an Ausleseversuchen erforderlich. Die Transportgeschwindigkeit der Transportvorrichtung in Transportrichtung durch den Gesamterfassungsbereich darf dabei natürlich nicht so schnell sein, dass diese Mindestzahl nicht mehr erreicht werden kann. Die erforderliche Mindestzahl ist allerdings nicht fix, sondern abhängig von der Anordnung, Anzahl und Empfindlichkeit der Erfassungseinheiten, und ist daher ggf. für den jeweiligen Einzelfall durch Testläufe zu bestimmen. Allerdings ist es für eine sichere Bestimmung der Positionen der Produktionsteile auf der Transportvorrichtung ohnehin ratsam, sich bei der Anzahl erfolgender Ausleseversuche deutlich oberhalb der erforderlichen Mindestzahl zu bewegen.

In einer weiteren vorteilhaften Ausführungsform wird zumindest eine Erfassungseinheit in einem Haltemittel angeordnet. Dies erlaubt insbesondere in vertikaler Richtung eine flexible Anordnung der Erfassungseinheiten. So können z.B. bei einer Anordnung von Erfassungseinheiten auf beiden Seiten einer durch den Gesamterfassungsbereich zu führenden Transportvorrichtung diese auf zwei als Masten ausgebildeten Haltemitteln in unterschiedlichen Höhen befestigt sein.

In einer weiteren vorteilhaften Ausführungsform werden die Erfassungseinheiten derart angeordnet, dass sich zumindest zwei der Erfassungsbereiche zumindest teilweise überlappen. Hierdurch kann - abhängig von der Lage der möglichen Positionen der Produktionsteile auf der Transportvorrichtung relativ zu den verwendeten Erfassungseinheiten - die statistische Auswertung der Häufigkeitsverteilung und damit die Lokalisierung der Produktionsteile verbessert werden, wenn beispielsweise eine Speichereinheit in einer Höhe zwischen zwei Erfassungseinheiten durch den Gesamterfassungsbereich geführt wird.

In einer weiteren vorteilhaften Ausführungsform wird die Anzahl an Erfassungseinheiten größer gewählt als die Anzahl der zu bestimmenden möglichen Positionen auf der Transportvorrichtung. Durch diese Maßnahme wird die Lokalisierung der Produktionsteile ebenfalls verbessert, da gewissermaßen die räumliche Auflösung vergrößert wird.

In einer weiteren vorteilhaften Ausführungsform wird dabei bezüglich jeder Speichereinheit eine Summenbildung der Anzahlen erfolgreicher Ausleseversuche jeweils benachbarter Erfassungseinheiten durchgeführt und aus der größten Summe auf die Position des der jeweiligen Speichereinheit zugeordneten Produktionsteils auf der Transportvorrichtung geschlossen.

In einer weiteren vorteilhaften Ausführungsform werden als Speichereinheiten RFID-Chips verwendet. Diese sind mittlerweile weit verbreitet und stellen somit eine kostengünstige Lösung zur Umsetzung des erfindungsgemäßen Verfahrens dar.

Im Folgenden wird die Erfindung anhand der in den Figuren dargestellten Ausführungsbeispiele näher beschrieben und erläutert. Es zeigen:
- FIG 1: eine schematische Darstellung der erfindungsgemäßen Vorrichtung zur Positionsbestimmung,
- FIG 2: die Erfassungsbereiche der Erfassungseinheiten aus Fig 1 in einer Seitenansicht,
- FIG 3: die Erfassungsbereiche der Erfassungseinheiten aus Fig 1 in einer Draufsicht,
- FIG 4: eine Datenstruktur zur Speicherung der erfolgreichen Ausleseversuche.

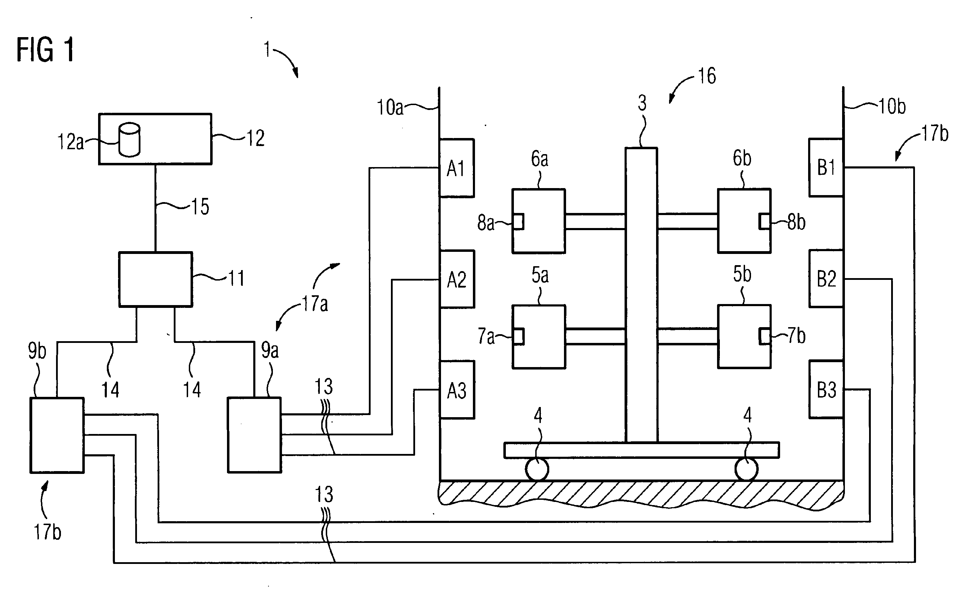

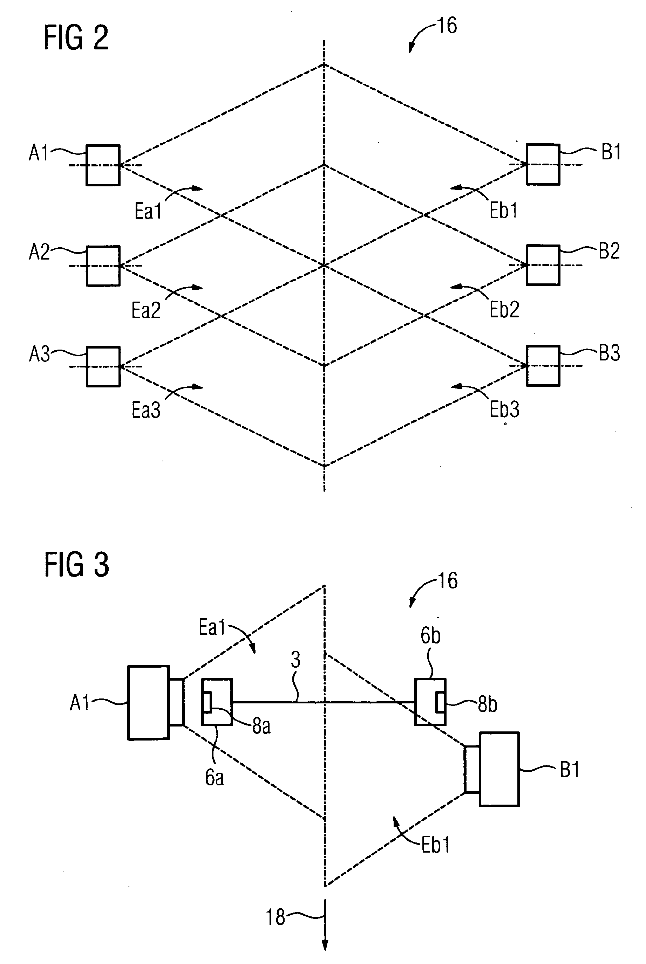

Fig 1 zeigt eine Vorrichtung zur Positionsbestimmung 1 von Produktionsteilen 5a, 5b, 6a, 6b auf einer Transportvorrichtung 3, die vier mögliche Positionen für die Produktionsteile 5a, 5b, 6a, 6b aufweist (links und rechts jeweils oben und unten). Eine die Produktionsteile 5a, 5b, 6a, 6b eindeutig identifizierende Teilekennung (bzw. Transponder-ID) ist in jeweils einer Speichereinheit 7a, 7b, 8a, 8b abgelegt, die an jedem Produktionsteil 5a, 5b, 6a, 6b angebracht ist. Zum Auslesen der Teilekennungen sind zwei Erfassungssysteme 17a, 17b vorgesehen, die aus je einem Lesegerät 9a, 9b und jeweils drei mit den Lesegeräten 9a, 9b über z.B. Antennenleitungen 13 verbundene Erfassungseinheiten A1, A2, A3, B1, B2, B3 bestehen. Die Erfassungseinheiten A1, A2, A3, B1, B2, B3 weisen je einen Erfassungsbereich Ea1, Ea2, Ea3, Eb1, Eb2, Eb3 (s. Figuren 2 und 3) auf, die zusammen einen Gesamterfassungsbereich 16 bilden, durch den die Transportvorrichtung 3 auf beispielsweise Transportrollen 4 bewegt werden kann. Die Erfassungseinheiten A1, A2, A3, B1, B2, B3 sind je Erfassungssystem 17a, 17b an einem Haltemittel 10a, 10b angeordnet, wobei die Transportvorrichtung 3 zwischen den Haltemitteln 10a, 10b hindurch geführt werden kann. Die Transportgeschwindigkeit in Transportrichtung durch den Gesamterfassungsbereich 16 beträgt typischerweise zwischen 0,1 m/s und 2 m/s, kann im Einzelfall aber natürlich von diesen Werten abweichen.

Die Erfassungseinheiten A1, A2, A3, B1, B2, B3 sind vorteilhafterweise jeweils in einem Sendezustand zum Aussenden eines Ansprechsignals für die Speichereinheiten 7a, 7b, 8a, 8b und in einem Empfangszustand zum Empfang des die Teilekennung enthaltenden Antwortsignals der Speichereinheiten 7a, 7b, 8a, 8b betreibbar, so dass in einem rollierenden Verfahren jede Erfassungseinheit A1, A2, A3, B1, B2, B3 das auf das von ihr selbst ausgesendete Ansprechsignal folgende Antwortsignal empfangen kann. Während des Durchführens der Transportvorrichtung 3 durch den Gesamterfassungsbereich 16 führt nun jede Erfassungseinheit A1, A2, A3, B1, B2, B3 mehrere Ausleseversuche durch, wobei jeder Erfassungseinheit A1, A2, A3, B1, B2, B3 für jede Speichereinheit 7a, 7b, 8a, 8b die Anzahl n11, ..., n46 der erfolgreichen Ausleseversuche zugeordnet wird.

Die Lesegeräte 9a, 9b sind z.B. mittels eines Ethernet-Switches 11 über Ethernetleitungen 14, 15 mit einer Rechnereinheit 12 verbunden, die einen Datenspeicher 12a aufweist, in dem die Anzahlen n11, ..., n46 der erfolgreichen Ausleseversuche in einer Datenstruktur gespeichert werden. Anhand dieser Daten n11, ..., n46 wird nun von der Rechnereinheit 12 über eine Häufigkeitsverteilung auf die Positionen des die jeweilige Speichereinheit 7a, 7b, 8a, 8b tragenden Produktionsteils 5a, 5b, 6a, 6b auf der Transportvorrichtung 3 geschlossen. Da der Erfolg eines Ausleseversuches vom Abstand einer (sendenden bzw. empfangenden) Erfassungseinheit A1, A2, A3, B1, B2, B3 von der jeweiligen Speichereinheit 7a, 7b, 8a, 8b abhängt, wird die Speichereinheit 8a zumindest hauptsächlich von den Erfassungseinheiten A1 und A2 erfolgreich ausgelesen werden, die Speichereinheit 7a zumindest hauptsächlich von den Erfassungseinheiten A2 und A3, während für die Speichereinheiten 7b, 8b und die Erfassungseinheiten B1, B2, B3 des Erfassungssystems 17b das eben Gesagte analog gilt. Dabei ist es bei dem in der Figur gezeigten Beispiel mit je zwei möglichen Positionen auf der Transportvorrichtung 3 links und rechts und je drei Erfassungseinheiten A1, A2, A3, B1, B2, B3 je Seite vorteilhaft, eine Summenbildung der Anzahlen n11, ..., n46 erfolgreicher Ausleseversuche jeweils benachbarter Erfassungseinheiten A1, A2, A3, B1, B2, B3 durchzuführen und aus der größten Summe auf die Position des jeweiligen Produktionsteils 5a, 5b, 6a, 6b zu schließen.

Auf diese Weise werden die Positionen der Produktionsteile 5a, 5b, 6a, 6b auf der Transportvorrichtung 3 beim Durchführen der Transportvorrichtung 3 durch den Gesamterfassungsbereich 16 der Vorrichtung zur Positionsbestimmung 1 automatisch bestimmt, wodurch nicht nur ein Tracking und/oder Tracing der Produktionsteile 5a, 5b, 6a, 6b möglich ist, sondern wodurch insbesondere ein Beitrag zur Qualitätsverbesserung durch den Einsatz von z.B. reaktiven SPC- (Statistical-Process-Control-) Verfahren, die bei Prozessabweichungen sofortige Korrekturen (Nachregelungen) ermöglichen, bei qualitätsrelevanten Einflüssen der örtlichen Lage der Produktionsteile 5a, 5b, 6a, 6b auf der Transportvorrichtung 3 geleistet wird. Darüber hinaus können bei Rückrufaktionen gezielt nur die Komponenten 5a, 5b, 6a, 6b angesprochen werden, die sich im Fertigungsprozess an einer bestimmten Lage auf der Transportvorrichtung 3 befunden haben, was ggf. zu einer deutlichen Kosteneinsparung führt.

Fig 2 zeigt die Erfassungsbereiche Ea1, Ea2, Ea3, Eb1, Eb2, Eb3 der Erfassungseinheiten A1, A2, A3, B1, B2, B3 aus Fig 1 in einer Seitenansicht. Die Erfassungsbereiche Ea1, Ea2, Ea3, Eb1, Eb2, Eb3 haben eine trichterförmige räumliche Ausdehnung mit einem Öffnungswinkel, der durch die Erfassungseinheit A1, A2, A3, B1, B2, B3 bestimmt oder einstellbar ist und im in der Figur gezeigten Beispiel ca. 60° beträgt, also von der quer durch die Erfassungseinheiten A1, A2, A3, B1, B2, B3 eingezeichneten Winkelhalbierenden je 30° nach oben und unten, wobei auch Erfassungsbereiche Ea1, Ea2, Ea3, Eb1, Eb2, Eb3 mit asymmetrischer Winkelverteilung relativ zur quer eingezeichneten Linie denkbar sind. Da der Erfolg eines Ausleseversuches vom Abstand zwischen auslesender Erfassungseinheit A1, A2, A3, B1, B2, B3 und auszulesender Speichereinheit 7a, 7b, 8a, 8b abhängt, sind die trichterförmigen Erfassungsbereiche Ea1, Ea2, Ea3, Eb1, Eb2, Eb3 mit einer endlichen Ausdehnung dargestellt, d.h. sie enden in der Figur an der strichgepunkteten Linie in der Mitte zwischen den Erfassungseinheiten A1, A2, A3, B1, B2, B3.

Alle Erfassungsbereiche Ea1, Ea2, Ea3, Eb1, Eb2, Eb3 zusammen bilden den Gesamterfassungsbereich 16, wobei sich jeweils links und rechts die beiden oberen und die beiden unteren Erfassungsbereiche Ea1, Ea2, Ea3, Eb1, Eb2, Eb3 teilweise überlappen. Werden nun Produktionsteile 5a, 5b, 6a, 6b auf einer Transportvorrichtung 3 durch den Gesamterfassungsbereich 16 geführt, wobei sich die möglichen Positionen für die Produktionsteile 5a, 5b, 6a, 6b in einer Höhe jeweils zwischen zwei Erfassungseinheiten A1, A2, A3, B1, B2, B3 befinden - wie in Fig 1 gezeigt -, so können die Ausleseversuche auch entsprechend bei jeweils zwei Erfassungseinheiten A1, A2, A3, B1, B2, B3 zum Erfolg führen. Bei einer derartigen Anordnung / Konstellation kann die Auswertung der Häufigkeitsverteilung der Anzahlen n11, ..., n46 erfolgreicher Ausleseversuche auf einfache Weise durch Summenbildung jeweils benachbarter Erfassungseinheiten A1, A2, A3, B1, B2, B3 für jede Speichereinheit 7a, 7b, 8a, 8b erfolgen und hieraus auf die Position des die jeweilige Speichereinheit 7a, 7b, 8a, 8b tragenden Produktionsteils 5a, 5b, 6a, 6b auf der Transportvorrichtung 3 geschlossen werden.

Fig 3 zeigt die Erfassungsbereiche Ea1, Ea2, Ea3, Eb1, Eb2, Eb3 der Erfassungseinheiten A1, A2, A3, B1, B2, B3 aus Fig 1 in einer Draufsicht, wobei hier nur die jeweils oberen Erfassungsbereiche Ea1, Eb1 und -einheiten A1, B1 dargestellt sind. Gleiches - Darstellung nur der jeweils oberen Komponenten - gilt auch für die Produktionsteile 6a, 6b samt Speichereinheiten 8a, 8b, die auf der Transportvorrichtung 3 in Transportrichtung 18 durch den Gesamterfassungsbereich 16 geführt werden. Dargestellt ist hier eine Anordnung, bei der sich die an einem ersten Haltemittel 10a und einem zweiten Haltemittel 10b (nicht dargestellt) befestigten Erfassungseinheiten A1, A2, A3 bzw. B1, B2, B3 nicht direkt gegenüberstehen, sondern parallel zur Transportrichtung 18 verschoben angebracht sind. Das hieraus resultierende veränderte Ansprechverhalten der Erfassungseinheiten A1, A2, A3, B1, B2, B3 kann sich in einer veränderten Häufigkeitsverteilung und damit in einer ggf. verbesserten Lokalisierung der Produktionsteile 5a, 5b, 6a, 6b auf der Transportvorrichtung 3 äußern. Dasselbe Resultat kann man natürlich auch dadurch erzielen, dass die Haltemittel 10a, 10b gegenüberliegend - also auf einer Linie senkrecht zur durch die Transportrichtung 18 gegebenen "Mittellinie" - angeordnet werden, allerdings mit gegenläufigem Drehsinn leicht gegeneinander verdreht werden.

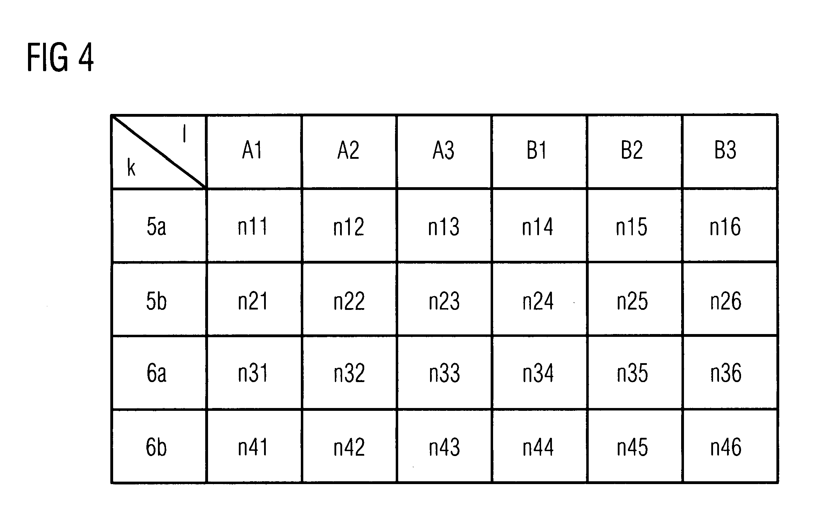

Fig 4 zeigt eine Datenstruktur zur Speicherung der Anzahlen n11, ..., n46 der erfolgreichen Ausleseversuche z.B. in einem Datenspeicher 12a einer Rechnereinheit 12. In den Spalten der Datenmatrix ist für jede Erfassungseinheit A1, A2, A3, B1, B2, B3 die Anzahl n11, ..., n46 erfolgreicher Ausleseversuche für jede Speichereinheit 7a, 7b, 8a, 8b eines Produktionsteils 5a, 5b, 6a, 6b abgelegt. Dabei ist die Erfassungseinheitenanzahl 1 - wie in Fig 1 gezeigt - gleich sechs und die Positionsanzahl k der in Fig 1 mit einem Produktionsteil 5a, 5b, 6a, 6b besetzten möglichen Positionen gleich vier. Zur Verdeutlichung des bei dieser Konstellation gut anwendbaren Algorithmusses der Positionsbestimmung über die Summenbildung jeweils benachbarter Erfassungseinheiten A1, A2, A3, B1, B2, B3 ist in der nachfolgenden Tabelle ein Beispiel möglicher Messwerte gezeigt:

| | A1 | A2 | A3 | B1 | B2 | B3 |
|---|---|---|---|---|---|---|
| 5a | 13 | 31 | 26 | 0 | 0 | 0 |
| 5b | 1 | 0 | 1 | 4 | 25 | 26 |
| 6a | 54 | 0 | 0 | 0 | 0 | 0 |
| 6b | 0 | 1 | 0 | 18 | 1 | 0 |

Die Bestimmung der Position der einzelnen Produktionsteile 5a, 5b, 6a, 6b erfolgt über die Ermittlung der größten Summe erfolgreicher Ausleseversuche benachbarter Erfassungseinheiten A1, A2, A3, B1, B2, B3. Als Ergebnis erhält man, dass sich das Produktionsteil 5a auf der linken Seite (in Fig 1) unten befand (da die Summe von n12 und n13 größer ist als die Summe von n11 und n12), das Produktionsteil 5b auf der rechten Seite unten, das Produktionsteil 6a links oben und das Produktionsteil 6b rechts oben.

Zusammenfassend betrifft die Erfindung ein Verfahren und eine Vorrichtung zur Positionsbestimmung von auf einer Transportvorrichtung positionierten Produktionsteilen, wobei jedes Produktionsteil eine berührungslos auslesbare Speichereinheit trägt, in welcher eine das Produktionsteil identifizierende Teilekennung hinterlegt ist. Um die Produktionsteile auf der Transportvorrichtung automatisch zu lokalisieren, wird vorgeschlagen, mit zumindest zwei Erfassungseinheiten während des Durchführens der Transportvorrichtung durch einen durch die Erfassungseinheiten gebildeten Gesamterfassungsbereich mehrfach Ausleseversuche der Speichereinheiten durchzuführen, wobei der Erfolg eines Ausleseversuches von einem Abstand der das Antwortsignal empfangenden Erfassungseinheit zu der auszulesenden Speichereinheit abhängt, und mittels einer Rechnereinheit über eine Häufigkeitsverteilung der Anzahlen erfolgreicher Ausleseversuche auf die Position des diese Speichereinheit tragenden Produktionsteils in der Transportvorrichtung zu schließen.

## Patentansprüche

1. Verfahren zur Positionsbestimmung von auf einer Transportvorrichtung (3) positionierten Produktionsteilen (5a, 5b, 6a, 6b), wobei jedes Produktiohsteil (5a, 5b, 6a, 6b) eine berührungslos auslesbare Speichereinheit (7a, 7b, 8a, 8b) trägt,
in welcher eine das Produktionsteil (5a, 5b, 6a, 6b) identifizierende Teilekennung hinterlegt ist,
wobei
- von zumindest einem Erfassungssystem (17a, 17b) mit einem Lesegerät (9a, 9b) und zumindest zweier einen Erfassungsbereich (Ea1, Ea2, Ea3, Eb1, Eb2, Eb3) aufweisenden Erfassungseinheiten (A1, A2, A3, B1, B2, B3) die Teilekennung des Produktionsteils (5a, 5b, 6a, 6b) ausgelesen wird,
- durch eine räumlich verteilte Anordnung der Erfassungseinheiten (A1, A2, A3, B1, B2, B3) des Erfassungssystems (17a, 17b) ein Gesamterfassungsbereich (16) gebildet wird,
**dadurch gekennzeichnet dass**,
- beim Durchführen der Transportvorrichtung (3) durch den Gesamterfassungsbereich (16) von wenigstens einem Teil der mehreren Erfassungseinheiten (A1, A2, A3, B1, B2, B3) mehrfach hintereinander Ausleseversuche der Teilekennungen der Produktionsteile (5a, 5b, 6a, 6b) erfolgen,
- bei einem Ausleseversuch ein Ansprechsignal für eine auszulesende Speichereinheit (7a, 7b, 8a, 8b) ausgesendet wird, welches bei Empfang in der Speichereinheit (7a, 7b, 8a, 8b) ein die Teilekennung übermittelndes Antwortsignal auslöst,
- der Ausleseversuch dann für eine Erfassungseinheit (A1, A2, A3, B1, B2, B3) als erfolgreich gewertet wird, wenn sie das Antwortsignal empfängt, wobei der Erfolg eines Ausleseversuches von einem Abstand der das Antwortsignal empfangenden Erfassungseinheit (A1, A2, A3, B1, B2, B3) zu der auszulesenden Speichereinheit (7a, 7b, 8a, 8b) abhängt,
- jeder Erfassungseinheit (A1, A2, A3, B1, B2, B3) für jede der Speichereinheiten (7a, 7b, 8a, 8b) die Anzahl (n11, ..., n46) an erfolgreichen Ausleseversuchen zugeordnet wird, und
- mittels einer Rechnereinheit (12) über eine Häufigkeitsverteilung der Anzahlen (n11, ..., n46) erfolgreicher Ausleseversuche von einer Speichereinheit (7a, 7b, 8a, 8b) über die Erfassungseinheiten (A1, A2, A3, B1, B2, B3) auf die Position des diese Speichereinheit (7a, 7b, 8a, 8b) tragenden Produktionsteils (5a, 5b, 6a, 6b) in der Transportvorrichtung (3) geschlossen wird.

2. Verfahren nach Anspruch 1,
wobei der Ausleseversuch dann für eine Erfassungseinheit (A1, A2, A3, B1, B2, B3) als erfolgreich gewertet wird, wenn sie das Ansprechsignal sendet und zumindest eine Erfassungseinheit (A1, A2, A3, B1, B2, B3) das Antwortsignal empfängt, wobei der Erfolg eines Ausleseversuches von einem Abstand der das Ansprechsignal sendenden Erfassungseinheit (A1, A2, A3, B1, B2, B3) zu der auszulesenden Speichereinheit (7a, 7b, 8a, 8b) abhängt.

3. Verfahren nach Anspruch 1 oder 2,
wobei zumindest eine Erfassungseinheit (A1, A2, A3, B1, B2, B3) in einem Sendezustand zum Aussenden des Ansprechsignals und danach in einem Empfangszustand zum Empfangen des Antwortsignals betrieben wird oder umgekehrt.

4. Verfahren nach Anspruch 3,
wobei nach einer bestimmbaren Anzahl von Ausleseversuchen wenigstens eine Erfassungseinheit (A1, A2, A3, B1, B2, B3) vom Empfangszustand in den Sendezustand wechselt oder umgekehrt.

5. Verfahren nach einem der Ansprüche 1 bis 4,
wobei die jeweilige Anzahl (n11, ..., n46) an erfolgreichen Ausleseversuchen in einer Datenstruktur in einem Datenspeicher (12a) der Rechnereinheit (12) gespeichert wird.

6. Verfahren nach einem der Ansprüche 1 bis 5,
wobei eine Transportgeschwindigkeit, mit der die Transportvorrichtung (3) in einer Transportrichtung (18) durch den Gesamterfassungsbereich (16) gefahren wird, in Abhängigkeit der Ausdehnung des Gesamterfassungsbereiches (16) in Transportrichtung (18) und von der Anzahl erfolgender Ausleseversuche bestimmt wird.

7. Verfahren nach einem der vorhergehenden Ansprüche,
wobei zumindest eine Erfassungseinheit (A1, A2, A3, B1, B2, B3) in einem Haltemittel (10a, 10b) angeordnet wird.

8. Verfahren nach einem der vorhergehenden Ansprüche,
wobei die Erfassungseinheiten (A1, A2, A3, B1, B2, B3) derart angeordnet werden, dass sich zumindest zwei der Erfassungsbereiche (Ea1, Ea2, Ea3, Eb1, Eb2, Eb3) zumindest teilweise überlappen.

9. Verfahren nach einem der vorhergehenden Ansprüche,
wobei die Anzahl (1) an Erfassungseinheiten (A1, A2, A3, B1, B2, B3) größer gewählt wird als die Anzahl (k) der zu bestimmenden möglichen Positionen auf der Transportvorrichtung (3).

10. Verfahren nach Anspruch 9,
wobei bezüglich jeder Speichereinheit (7a, 7b, 8a, 8b) eine Summenbildung der Anzahlen (n11, ..., n46) erfolgreicher Ausleseversuche jeweils benachbarter Erfassungseinheiten (A1, A2, A3, B1, B2, B3) durchgeführt wird, und wobei aus der größten Summe auf die Position des der jeweiligen Speichereinheit zugeordneten Produktionsteils (5a, 5b, 6a, 6b) auf der Transportvorrichtung (3) geschlossen wird.

11. Verfahren nach einem der vorhergehenden Ansprüche,
wobei als Speichereinheiten (7a, 7b, 8a, 8b) RFID-Chips verwendet werden.

12. Vorrichtung (1) zur Positionsbestimmung von auf einer Transportvorrichtung (3) positionierten Produktionsteilen (5a, 5b, 6a, 6b), wobei jedes Produktionsteil (5a, 5b, 6a, 6b) eine berührungslos auslesbare Speichereinheit (7a, 7b, 8a, 8b) trägt, in welcher eine das Produktionsteil (5a, 5b, 6a, 6b) identifizierende Teilekennung hinterlegt ist,
- mit zumindest einem Erfassungssystem (17a, 17b), wobei das Erfassungssystem (17a, 17b) ein Lesegerät (9a, 9b) und zumindest zwei einen Erfassungsbereich (Ea1, Ea2, Ea3, Eb1, Eb2, Eb3) aufweisende Erfassungseinheiten (A1, A2, A3, B1, B2, B3) aufweist,
- mit einer Rechnereinheit
- sowie mit Mitteln zur Durchführung des Verfahrens nach einem der Ansprüche 1 bis 11.

## Claims

1. Method for determining the position of production components (5a, 5b, 6a, 6b) positioned on a transport device (3), each production component (5a, 5b, 6a, 6b) having a memory unit (7a, 7b, 8a, 8b) which can be read in a contactless manner and stores a component identifier which identifies the production component (5a, 5b, 6a, 6b),
- the component identifier of the production component (5a, 5b, 6a, 6b) being read by at least one detection system (17a, 17b) having a reader (9a, 9b) and at least two detection units (A1, A2, A3, B1, B2, B3) which have a detection range (Ea1, Ea2, Ea3, Eb1, Eb2, Eb3),
- an overall detection range (16) being formed by a spatially distributed arrangement of the detection units (A1, A2, A3, B1, B2, B3) of the detection system (17a, 17b),
**characterized in that**
- at least some of the plurality of detection units (A1, A2, A3, B1, B2, B3) attempt to read the component identifiers of the production components (5a, 5b, 6a, 6b) several times in succession as the transport device (3) is led through the overall detection range (16),
- an address signal for a memory unit (7a, 7b, 8a, 8b) to be read is emitted during a read attempt, which address signal triggers a response signal, which transmits the component identifier, when received in the memory unit (7a, 7b, 8a, 8b),
- the read attempt is judged to be successful for a detection unit (A1, A2, A3, B1, B2, B3) when the latter receives the response signal, the success of a read attempt depending on a distance between the detection unit (A1, A2, A3, B1, B2, B3) which receives the response signal and the memory unit (7a, 7b, 8a, 8b) to be read,
- each detection unit (A1, A2, A3, B1, B2, B3) is assigned the number (n11, ..., n46) of successful read attempts for each of the memory units (7a, 7b, 8a, 8b), and
- a frequency distribution of the numbers (n11, ..., n46) of successful attempts to read a memory unit (7a, 7b, 8a, 8b) via the detection units (A1, A2, A3, B1, B2, B3) is used to infer the position of the production component (5a, 5b, 6a, 6b), which has this memory unit (7a, 7b, 8a, 8b), in the transport device (3) by means of a computer unit (12).

2. Method according to Claim 1,
the read attempt being judged to be successful for a detection unit (A1, A2, A3, B1, B2, B3) when it transmits the address signal and at least one detection unit (A1, A2, A3, B1, B2, B3) receives the response signal, the success of a read attempt depending on a distance between the detection unit (A1, A2, A3, B1, B2, B3) which transmits the address signal and the memory unit (7a, 7b, 8a, 8b) to be read.

3. Method according to Claim 1 or 2,
at least one detection unit (A1, A2, A3, B1, B2, B3) being operated in a transmission state for emitting the address signal and then being operated in a reception state for receiving the response signal or vice versa.

4. Method according to Claim 3,
at least one detection unit (A1, A2, A3, B1, B2, B3) changing from the reception state to the transmission state or vice versa after a determinable number of read attempts.

5. Method according to one of Claims 1 to 4,
the respective number (n11, ..., n46) of successful read attempts being stored in a data structure in a data memory (12a) of the computer unit (12).

6. Method according to one of Claims 1 to 5,
a transport speed at which the transport device (3) is moved through the overall detection range (16) in a direction of transport (18) being determined on the basis of the extent of the overall detection range (16) in the direction of transport (18) and the number of read attempts being made.

7. Method according to one of the preceding claims,
at least one detection unit (A1, A2, A3, B1, B2, B3) being arranged in a holding means (10a, 10b).

8. Method according to one of the preceding claims,
the detection units (A1, A2, A3, B1, B2, B3) being arranged in such a manner that at least two of the detection ranges (Ea1, Ea2, Ea3, Eb1, Eb2, Eb3) at least partially overlap.

9. Method according to one of the preceding claims,
the number (1) of detection units (A1, A2, A3, B1, B2, B3) being selected to be greater than the number (k) of possible positions to be determined on the transport device (3).

10. Method according to Claim 9,
the numbers (n11, ..., n46) of successful read attempts by respectively adjacent detection units (A1, A2, A3, B1, B2, B3) being summed for each memory unit (7a, 7b, 8a, 8b), and the position of the production component (5a, 5b, 6a, 6b), which is assigned to the respective memory unit, on the transport device (3) being inferred from the greatest sum.

11. Method according to one of the preceding claims,
RFID chips being used as memory units (7a, 7b, 8a, 8b).

12. Device (1) for determining the position of production components (5a, 5b, 6a, 6b) positioned on a transport device (3), each production component (5a, 5b, 6a, 6b) having a memory unit (7a, 7b, 8a, 8b) which can be read in a contactless manner and stores a component identifier which identifies the production component (5a, 5b, 6a, 6b),
- having at least one detection system (17a, 17b), the detection system (17a, 17b) having a reader (9a, 9b) and at least two detection units (A1, A2, A3, B1, B2, B3) which have a detection range (Ea1, Ea2, Ea3, Eb1, Eb2, Eb3),
- having a computer unit,
- and having means for carrying out the method according to one of Claims 1 to 11.

## Revendications

1. Procédé de détermination de la position de pièces ( 5a, 5b, 6a, 6b ) de production mises en position sur un dispositif ( 3 ) de transport, chaque pièce ( 5a, 5b, 6a, 6b ) de production portant une unité ( 7a, 7b, 8a, 8b ) de mémoire qui peut être lue sans contact et dans laquelle est mémorisée une caractérisation de pièce identifiant la pièce ( 5a, 5b, 6a, 6b ) de production,
dans lequel
- on lit la caractérisation de la pièce ( 5a, 5b, 6a, 6b ) de production par au moins un système ( 17a, 17b ) de détection ayant un appareil ( 9a, 9b ) de lecture et au moins deux unités ( A1, A2, A3, B1, B2, B3 ) de détection ayant une partie ( Ea1, Ea2, Ea3, Eb1, Eb2, Eb3 ) de détection,
- on forme une partie ( 16 ) globale de détection par un agencement réparti dans l'espace des unités ( A1, A2, A3, B1, B2, B3 ) de détection du système ( 17a, 17b ) de détection,
**caractérisé en ce que**
- lorsque le dispositif ( 3 ) de transport passe dans la partie ( 16 ) globale de détection, on effectue, par au moins une partie des plusieurs unités ( A1, A2, A3, B1, B2, B3 ) de détection, des essais de lecture se succédant plusieurs fois des caractérisations des pièces ( 5a, 5b, 6a, 6b ) de production,
- dans un essai de lecture, on émet, pour une unité ( 7a, 7b, 8a, 8b ) de mémoire à lire, un signal de réaction qui déclenche, à la réception dans l'unité ( 7a, 7b, 8a, 8b ) de mémoire, un signal de réponse transmettant la caractérisation de pièce,
- on évalue, comme étant couronné de succès, l'essai de lecture pour une unité ( A1, A2, A3, B1, B2, B3 ) de détection lorsqu'elle reçoit le signal de réponse, le succès d'un essai de lecture dépendant d'une distance entre l'unité ( A1, A2, A3, B1, B2, B3 ) de détection recevant le signal de réponse et l'unité ( 7a, 7b, 8a, 8b ) de mémoire à lire,
- on affecte à chaque unité ( A1, A2, A3, B1, B2, B3 ) de détection pour chacune des unités ( 7a, 7b, 8a, 8b ) de mémoire le nombre ( n11, ..., n46 ) d'essais de lecture couronnés de succès, et
- au moyen d'une unité ( 12 ) de calcul, on déduit, par une répartition de fréquence des nombres ( n11, ..., n46 ) d'essais de lecture couronnés de succès d'une unité ( 7a, 7b, 8a, 8b ) de mémoire par les unités ( A1, A2, A3, B1, B2, B3 ) de détection, la position dans le dispositif ( 3 ) de transport de la pièce ( 5a, 5b, 6a, 6b ) de production portant cette unité ( 7a, 7b, 8a, 8b ) de mémoire.

2. Procédé suivant la revendication 1,
dans lequel on évalue comme couronné de succès l'essai de lecture pour une unité ( A1, A2, A3, B1, B2, B3 ) de détection, lorsqu'elle émet le signal de réaction et lorsqu'au moins une unité ( A1, A2, A3, B1, B2, B3 ) de détection reçoit le signal de réponse, le succès d'un essai de lecture dépendant des distances entre l'unité ( A1, A2, A3, B1, B2, B3 ) de détection émettant le signal de réaction et de l'unité ( 7a, 7b, 8a, 8b ) de mémoire à lire.

3. Procédé suivant la revendication 1 ou 2,
dans lequel on fait fonctionner au moins une unité ( A1, A2, A3, B1, B2, B3 ) de détection dans un état d'émission pour l'émission du signal de réaction et ensuite dans un état de réception pour la réception du signal de réponse ou inversement.

4. Procédé suivant la revendication 3,
dans lequel après un nombre pouvant être déterminé d'essais de lecture, on fait passer au moins une unité ( A1, A2, A3, B1, B2, B3 ) de détection de l'état de réception à l'état d'émission ou inversement.

5. Procédé suivant l'une des revendications 1 à 4,
dans lequel on mémorise le nombre ( n11, ..., n46 ) respectif d'essais de lecture couronnés de succès dans une structure de données d'une mémoire ( 12a ) de données de l'unité ( 12 ) de calcul.

6. Procédé suivant l'une des revendications 1 à 5,
dans lequel on détermine une vitesse de transport à laquelle le dispositif ( 3 ) de transport est déplacé dans un sens ( 18 ) de transport dans la partie ( 16 ) globale de détection en fonction de l'étendue de la partie ( 16 ) globale de détection dans le sens ( 18 ) de transport et du nombre d'essais de lecture effectués.

7. Procédé suivant l'une des revendications précédentes,
dans lequel on dispose au moins une unité ( A1, A2, A3, B1, B2, B3 ) de détection dans un moyen ( 10a, 10b ) d'arrêt.

8. Procédé suivant l'une des revendications précédentes,
dans lequel on dispose des unités ( A1, A2, A3, B1, B2, B3 ) de détection de façon à ce qu'au moins deux des parties ( Ea1, Ea2, Ea3, Eb1, Eb2, Eb3 ) de détection se chevauchent au moins en partie.

9. Procédé suivant l'une des revendications précédentes,
dans lequel on choisit un nombre ( 1 ) d'unités ( A1, A2, A3, B1, B2, B3 ) de détection plus grand que le nombre ( k ) des positions éventuelles à déterminer sur le dispositif ( 3 ) de transport.

10. Procédé suivant la revendication 9,
dans lequel par rapport à chaque unité ( 7a, 7b, 8a, 8b ) de mémoire, on effectue la somme des nombres ( n11, ..., n46 ) d'essais de lecture couronnés de succès de respectivement des unités ( A1, A2, A3, B1, B2, B3 ) de détection voisines et dans lequel, à partir de la somme la plus grande, on déduit la position sur le dispositif ( 3 ) de transport de la pièce ( 5a, 5b, 6a, 6b ) de production affectée à l'unité de mémoire respective.

11. Procédé suivant l'une des revendications précédentes,
dans lequel on utilise comme unités ( 7a, 7b, 8a, 8b ) de mémoire des puces RFID.

12. Dispositif ( 1 ) de détermination de la position de pièces ( 5a, 5b, 6a, 6b ) de production mises en position sur un dispositif ( 3 ) de transport, chaque pièce ( 5a, 5b, 6a, 6b ) de production portant une unité ( 7a, 7b, 8a, 8b ) de mémoire qui peut être lue sans contact et dans laquelle est mémorisée une caractérisation identifiant la pièce ( 5a, 5b, 6a, 6b ) de production,
- comprenant au moins un système ( 17a, 17b ) de détection, le système ( 17a, 17b ) de détection ayant un appareil ( 9a, 9b ) de lecture et au moins deux unités ( A1, A2, A3, B1, B2, B3 ) de détection ayant une partie ( Ea1, Ea2, Ea3, Eb1, Eb2, Eb3 ) de détection,
- comprenant une unité de calcul,
- ainsi que comprenant des moyens pour effectuer le procédé suivant l'une des revendications 1 à 11.
